Europäisches Patentamt

European Patent Office

Office européen des brevets

(19)

(11) **EP 1 391 776 A1**

(12) **EUROPEAN PATENT APPLICATION**

(43) Date of publication:
**25.02.2004 Bulletin 2004/09**

(21) Application number: **02016104.8**

(22) Date of filing: **19.07.2002**

(51) Int Cl.7: **G03B 21/00**, G03B 21/20,
G03B 21/28, H04N 9/31,
H04N 5/14, G02B 5/30,
G02B 27/00

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Sony International (Europe) GmbH
10785 Berlin (DE)**

(72) Inventor: **Kamm, Markus,**
**c/o Advanced Techn. Center Stuttgart**
**70327 Stuttgart (DE)**

(74) Representative: **Müller - Hoffmann & Partner
Patentanwälte,**
**Innere Wiener Strasse 17**
**81667 München (DE)**

(54) **Light collecting, integrating and redirecting device**

(57)    To enable a particular high throughput in a light collecting, integrating and redirection arrangement it is proposed to have a light integrating device (10) and at least one reflecting element (20). Said light integrative device (10) has a light input surface (10i) with a light incidence aperture (I) and reflective areas (11) outside said light incidence aperture (I). Further, said light integrating device (10) is provided with a side face (10s) and is adapted for reflecting light travelling between said light input surface (10i) and a light output surface (10o). The reflective element (20) is adapted for reflecting at least a part of redirected primary illumination light (RL1) back to the light integrating device (10), where it is recovered when forward reflected at said reflective areas.

Fig. 1

**Description**

The present invention relates to a light collecting, integrating and redirecting arrangement, in particular for a projection system, a display system and/or the like. More particular the present invention relates to a light collecting, integrating and redirecting arrangement employing an optical setup with a particular high recovery rate of light, for instance in an illumination path of projection engines or the like.

Recently, many electronic appliances have been provided with display devices to enable an easier use and control of these appliances. Additionally, display devices of electronic equipment, such as personal computers, personal digital assistance (PDA), video reproducing appliances and/or the like have to be less space and energy consuming. Therefore, light produced by illumination devices or light source devices has to be handled very carefully to enable a particular effective evaluation of the produced light.

It is known in the art that light is lost during the illumination process along the illumination path, for instance when processes of polarization with respect to the primary illumination light is necessary for an imaging process. Alternatively or additionally, a further loss of light occurs when an over-illumination of an imager panel is necessary or cannot be avoided, i.e. when the illuminated area is larger than the active area of the imager panel of the imaging system.

It is an object of the present invention to provide a light collecting, integrating and redirecting arrangement, in particular for a projection system, a display system and/or the like which is capable of reducing losses of light in the illumination path and which therefore enables a particular effective illumination.

The object is achieved by a light collecting, integrating and redirecting arrangement according to claim 1. Preferred embodiments of the inventive light collecting, integrating and redirecting arrangement are within the scope of the dependent subclaims.

The inventive light collecting, integrating and redirecting arrangement is adapted for a projection system, a display system and/or the like. The inventive light collecting, integrating and redirecting arrangement comprises a light integrating device and at least one reflective element. Said light integrating device is adapted for receiving and integrating primary illumination light. Said light integrating device comprises a light input surface for an entry of said primary illumination light through an light incidence aperture of said light input surface into said light integrating device. Further, said light integrating device comprises a light exit or light output surface for an exit of collected, integrated and redirected primary illumination light from said light integrating device, in particular as redirected primary illumination light. Additionally, said light integrating device of said inventive light collecting, integrating and redirecting arrangement comprises at least one inner or side face or wall being adapted for reflecting light travelling between said light input surface and said light output surface within said light integrating device. A provided reflective element is adapted for reflecting at least a part of received redirected primary illumination light back to said light integrating device for entering the same through said light output surface. Said light input surface of said light integrating device is provided with reflecting areas disposed outside portions occupied by said light incidence aperture and being adapted for reflecting light coming from the inside of said light integrating device back to the inside of said light integrating device.

In contrast to prior art light collecting, integrating and redirecting arrangements, according to the invention the light input surface of the light integrated device possesses reflecting areas and an additional light reflecting element is provided, the cooperation of both enabling parts of the received and redirected primary illumination light to travel between these both reflecting elements, thereby enabling said parts of said primary and redirected illumination light to be more effectively evaluated and used for further illumination.

Thereby, two strategies are alternatively or simultaneously followed. One of the strategies is to arrange the additional reflective element to reflect back light components which would be imaged outside an area of space to be used for the imaging process, e.g. outside an active area of an imaging device. The other strategy which can be followed is to reflect back components of the primary illumination light having certain properties and being therefore of no use for the imaging process. Such a property can the polarization state of such a component of primary illumination light, in particular in the case where the imaging system uses a certain polarization component only.

Therefore, appropriately adapting the additional reflective element enables the inventive light collecting, integrating and redirecting arrangement to use components of the primary illumination light which are wasted in conventional systems. Therefore, the amount of light which can be used for illumination is increased with the inventive arrangement.

The light integrating device of the inventive light collecting, integrating and redirecting arrangement can take on several forms and variations.

According to a preferred embodiment of the present invention said light integrating device is or comprises a light pipe, an integrator rod and/or the like.

Further on, the light integrating device may be build up as a solid rod, made of an optical transparent material, of plastic, of glass and/or the like.

Alternatively, said light integrating device may be formed as a hollow tube device.

Further alternatively or additionally said light integrating device may have reflecting or mirrored inner or said walls or faces, in particular for enabling a particular effective reflection of the primary illumination light to be integrated to be redirected.

The cross-section of the light integrating device may be rectangular, circular, or oval. The cross-section of the output or exit may have the same shape as the display panel, for instance rectangular. The entrance can have a different size and a different cross-section, e.g. squared.

The geometrical arrangement of said at least one reflective element with respect to the light integrating device may be realized in a variety of ways.

It is of advantage to dispose the at least one reflective element outside said light integrating device.

Furtheron, said at least one reflective element may be disposed in, at or around an optical axis of an output path of said light integrating device.

Further, said at least one reflective element may be disposed in close proximity to said light output surface of said light integrating device. According to a further preferred embodiment of the invention said at least one reflective element is provided attached to the light output surface of said light integrating device.

To separate different components of primary illumination light a reflective polarizer device, and in particular a circular polarizer, may be provided as said at least one reflective element. Such an embodiment is particular space saving.

It is further preferred that in the case of a reflective polarizer device said at least one reflective element is or comprises a cholesteric film or a plurality thereof.

Alternatively, said reflective polarizer device may be a linear grid polarizer connected with a quarter-wave retarder device to transform the linear polarization component into a circular one polarization component.

According to another embodiment of the present invention said at least one reflective element is or comprises a polarizing beam splitter device, in particular together with a quarter wave retarder device.

It is of further advantage when said at least one reflective element completely covers the light output surface. This is of particular value when using a reflective polarizer device.

According to a further advantageous embodiment said at least one reflective element is a reflecting or mirror coated frame having reflecting frame portions and a transparent central portion, opening, aperture or the like. According to this measure light portions which would be directed to non-active areas of imager panels can be reflected back to be redirected and to be enabled for further use.

Therefore, according to a further preferred embodiment of the present invention, said frame portions are associated with non-active areas of a display device and/or said central portion is associated with active areas of a display device.

As a further alternative said at least one reflective element may be build up as a part of an illumination unit.

These and further aspects of the present invention are further elucidated according to the following remarks: Light is lost in the illumination path of projection engines, e.g. when it is polarized or when it over-illuminates an imager panel. In order to enhance the light efficiency of projection engines, the present invention gives solutions how to recover the light in an efficient way.

E.g. LCD panels - in projection engines as well as in direct view displays - need polarizers at the entrance and at the exit in order to work. A high extinction ratio of these polarizers is necessary to get good image contrasts. Commonly, absorptive foil polarizers are used as entrance and exit polarizers due to their high extinction ratios. When illuminating the absorptive entrance polarizer of a panel with unpolarized light, at least 50% of the light is absorbed. This has the drawbacks that the light efficiency drops down by a factor two and that heat is produced due to the absorption. The latter degrades or destroys the polarizers and - if the polarizer is directly laminated on the panel - also the panel is affected.

To solve both drawbacks, polarization converting systems (PCS) are used, e.g. in LCD projectors. A known PCS e.g. consists of an array of polarizing beam-splitter prisms. Each prism is multi-layer coated in a vacuum chamber. The prisms are glued together forming a plate. This type of PCS is only working in conjunction with fly-eye lenses, sometimes called integrator lenses. Unpolarized light is split at the prisms into its s- and p-component. The p-component is transformed by a half-wave retarder-foil into s-component. In practice about 70 - 80% of the light is polarized in the right direction.

Like fly-eye lenses, integrator rods are used to illuminate panels of projection engines uniformly, e.g. with rectangular shape. There exist at least two preferred embodiments of integrator rods. In a first embodiment it is solid glass rod. The second is a rectangular shaped tunnel where the inner walls are coated with a mirror. Typically the entrance of the rod is near the second focal point of an elliptical reflector to couple the light into the rod.

Integrator rods are mainly used in illumination systems of DMD type projectors, i.e. Digital Mirror Device type projectors, whereas LCD projectors use parabolic reflectors in combination with fly-eye lenses due to the need of a polarization converting systems (PCS) as described above.

EP1098536 shows the use of an integrator rod in combination with a special colour-filter wheel to recapture light in single panel projection systems. Single panel systems have the general drawback of time sequential colour generation. Principal 2/3 of the light is lost with time sequential colour generation. EP1098536 also shows the use of dichroic colour filters, where the complementary and not used coloured light is reflected back into the integrator rod. At the entrance of the rod, which is partially coated with a mirror coating, most of this light is reflected forward for recovery.

Reflective polarizers, which transmit one polarization component and reflect the complementary one, are sometimes used to enhance the brightness in commonly used LCD flat panel displays.

PCS as described above are expensive to manufacture as up to 16 or more polished prism rods needed. Further, the prisms are multi-layer coated in vacuum chambers and glued together. There is a need of precisely laminating half-wave foils on the prisms. Additional these kinds of PCS are restricted to the use of an integrator optics. This lowers the design flexibility. Other approaches to recover polarized light using polarizing beam splitters are bulky and also expensive.

In order to uniformly illuminate the panel of a projection system, it has to be over-illuminated. This over-illuminated light is incident outside the active area of the panel and is lost. Over-illumination is necessary to keep the illuminance uniform even at the edges of the panel. It is also necessary in order to compensate for mechanical tolerances of the optical parts.

To keep the losses due to this over-illumination as small as possible, the shape of the illumination has to fit the rectangular shape of the panel. This requires special optical parts in the illumination path, like rectangular shaped integrator rods or the use of fly-eye lenses.

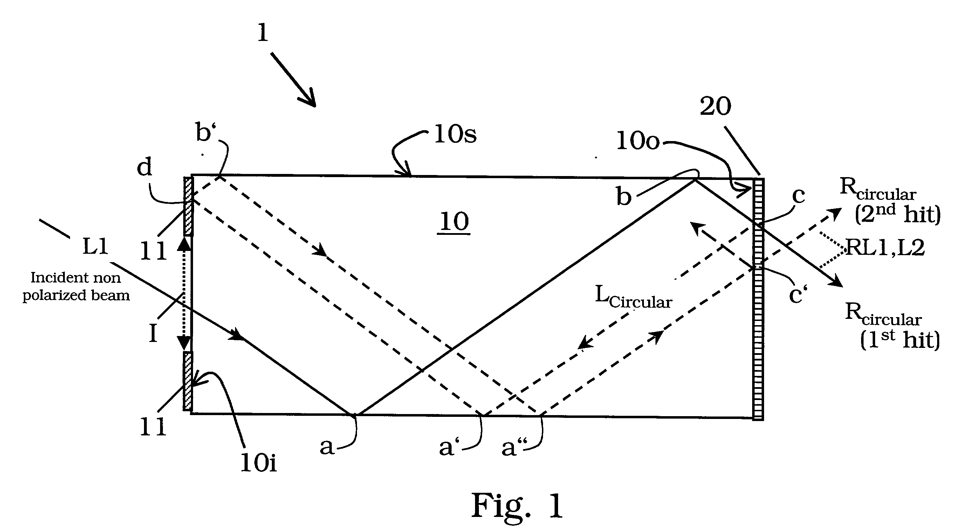

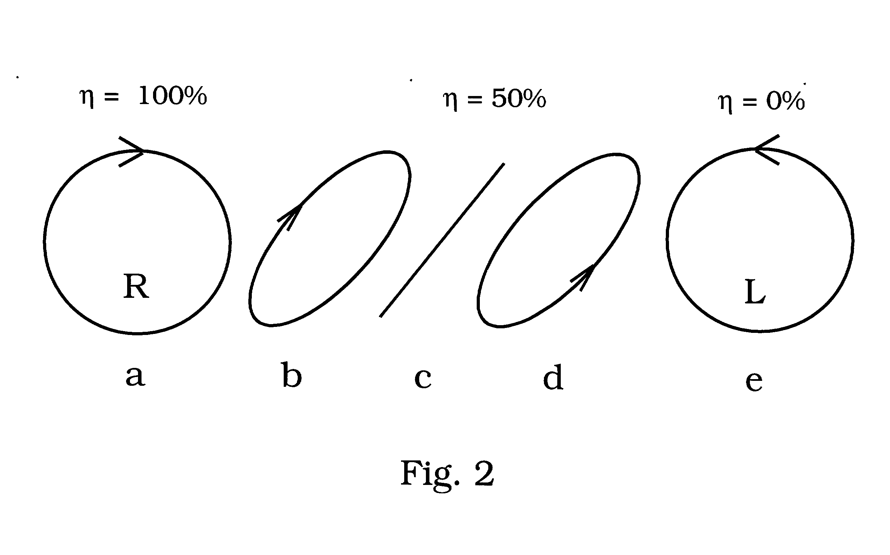

A basic idea of the described as follows (also see Fig. 1): A non-polarized light beam entering the light pipe 10 is multiple reflected inside the pipe and finally incident on a reflective polarizer 20. A reflective polarizer transmits one polarization component and reflects the complementary one instead of absorbing it as it is done with conventional stretched foil polarizers. In Fig. 1, the reflective polarizer is realized by cholesteric films acting as a circular polarizer. One circular polarization component, i.e. here the R- or right circular component, is transmitted, whereas the complementary one, i.e. here L- or left circular component, is reflected. The back reflected circular polarized light is multiple reflected at the surfaces of the light pipe, thereby changing the polarization state from original circular to an elliptical state. The ellipticity and direction of the polarisation state depends on the angles of incidence and the number of reflections inside the light pipe, which is not the same for all beams. Finally, the back reflected beam is either incident on the mirror coated area 11 of the entrance surface of the light pipe or - with a certain probability - it is passing the hole, being lost. When the beam is reflected by the mirror 11, the chirality of the elliptical or circular polarization state changes e.g. from L-circular to R-circular. Forward reflected by the mirror 11, the beam is multiple reflected inside the light pipe and being in a certain elliptical polarization state when incident again on the reflective polarizer 20. Here the R component is transmitted and the L component is back reflected into the pipe, repeating the previously described procedure. The amount of transmitted R-circular polarized light depends on the ellipticity of the polarization state of the incident light, as can be seen from Fig. 2.

When using a polarizer which reflects linear polarized light, the polarization has to be converted into a circular polarization. This can be achieved by using a quarter-wave retarder in front of the polarizer.

As a result light is leaving the system completely polarized. The back-reflected component of polarized light is partially recovered, enhancing the luminous efficiency when compared to absorbing polarizers. The original purpose of a light pipe, to give a uniform illumination distribution at the exit, keeps valid.

The efficiency can be estimated as follows: As mentioned above, the amount of light transmitted by the polarizer depends on the polarization state immediately before incident on the polarizer. The ideal case for the above mentioned R-circular transmitting polarizer would be that the back reflected L-circular beam - which is to be recovered - is transformed into R-circular. Then 100% would be transmitted by the polarizer. In the worst case the polarization state would not be changed. Then no light is transmitting the polarizer, meaning that no recovery takes place. In practice the polarization state can be expected somewhere between R- and L-circular. It's a matter of design to optimise this by adjusting the length of the light pipe and adopting the angles of incidence. An additional retarder film - placed directly in front of the polarizer - could also help to adjust the polarization state.

With the following definitions ans assignments:

| | |
|---|---|
| $h$ | Polarization degree of the beam to be recovered, immediately before incident on the polarizer. $h = 1$ for incident light being completely R-circular polarized and $h = 0$ for being completely L-circular polarized. |
| $t_{in}$ | Transmittance when initially entering the light pipe. |
| $t_{LP}$ | Transmittance when passing the light pipe. |
| $t_{Po1}$ | Transmittance of the reflective polarizer (20). R-polarization only. |
| $r_{Po1}$ | Reflectance of the reflective polarizer (20). L-polarization only. |
| $p$ | Probability that light is reflected by the mirror and not passing the hole, thus being lost. (Because the light should be quite uniform distributed after passing the light pipe twice, this is equal to the ratio between the |

mirror-coated area to the total entrance area of the light pipe),

$r_M$      Reflectance of the mirror coating,

$t_1$      $= t_{in} \times t_{LP} \times t_{Po1} \times 0.5 =$ Transmitted light after first hit at the polarizer,

$r_1$      $= t_{in} \times t_{LP} \times r_{Po1} \times 0.5 =$ Reflected light after first hit at the polarizer, and

$t_{pass} = $      $t_{LP}^2 \times p \times r_M$

the total transmittance of the light pipe/polarizer system for initially unpolarized light can be estimated by:

$$
\begin{aligned}
t_{total} \quad &= \quad t_1 + r_1 \cdot t_{pass} \cdot t_{pol} \cdot h \cdot \sum_{i=0}^{\infty} \left( t_{pass} \cdot r_{pol} \cdot (1-h) \right)^i \\
&= \quad t_1 + r_1 \cdot t_{pass} \cdot t_{pol} / \left( 1 - t_{pass} \cdot r_{pol} \cdot (1-h) \right) \quad .
\end{aligned}
$$

Assuming the realistic values $t_{in} = 96\%$, $t_{LP} = 99\%$, $t_{Po1} = 90\%$, $r_{Po1} = 90\%$, $p = 75\%$, $r_M = 98\%$, gives

$t_{total} = 70.5\%$      when h=1 for the ideal case,

$t_{total} = 63.3\%$      when h=0.5 for a more realistic case, and

$t_{total} = 42.8\% = t_1$      when h=0.0 for the worst case, i.e. no recovery.

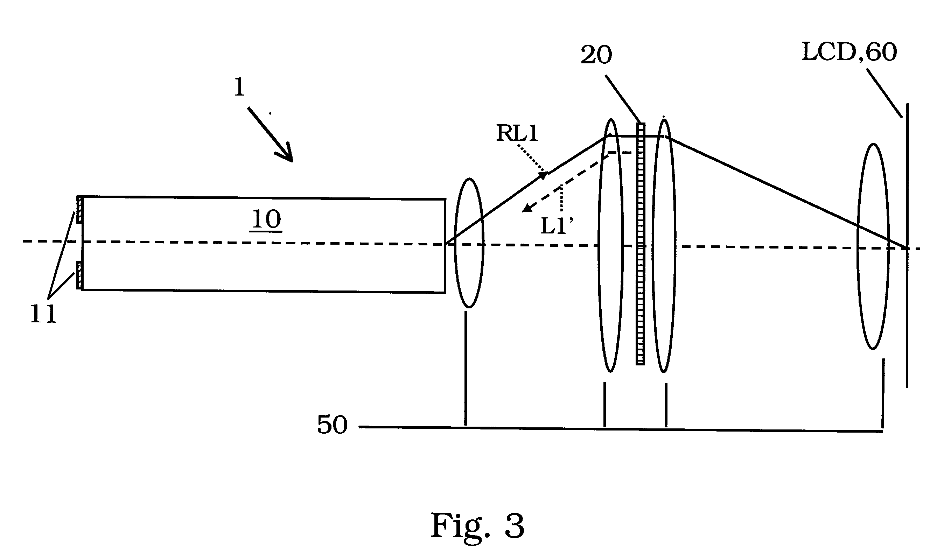

In Fig. 3 the reflective polarizer 20 is placed inside the optical path of the illumination unit 50. At this position the thermal stress on the polarizer is much lower compared to the position directly at the exit of the light pipe.

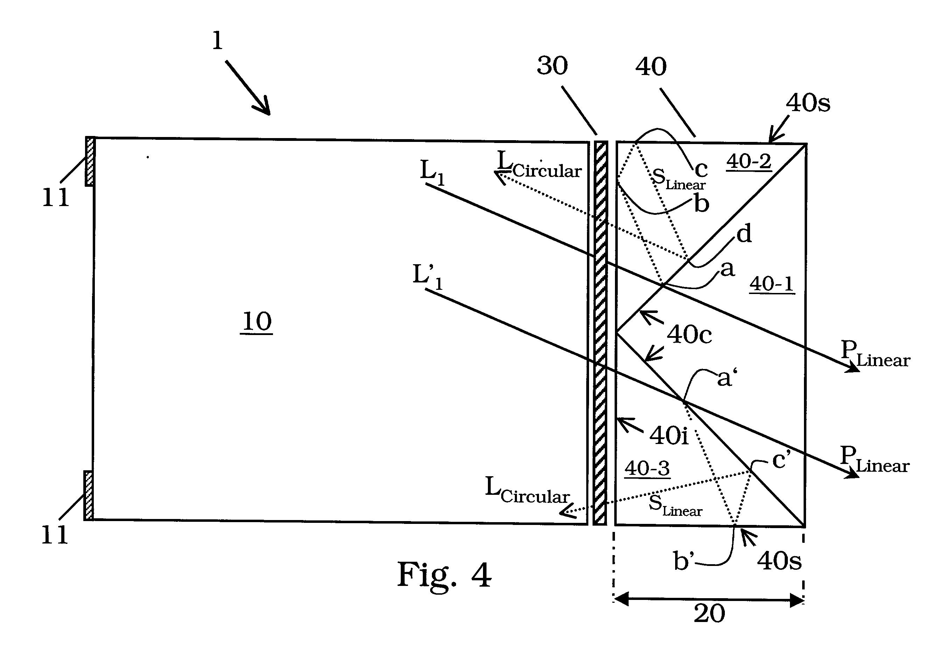

As an alternative, Fig. 4 the cholesteric reflective polarizer 20 can be replaced by a polarizing beam-splitter 40. An additional quarter wave retarder 30 is needed, because the beam splitter 40 splits light beams into two orthogonal linear polarized components.

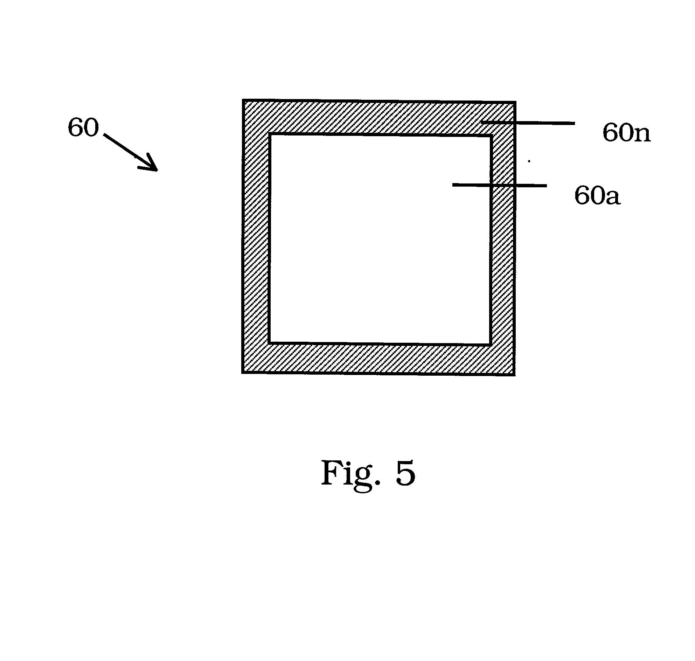

In order to compensate mechanical tolerances and to have a uniform illumination over the entire active area of the LCD panel, the panel is slightly over-illuminated. Typically about 20% of the light is lost in this over-illuminated margin, as can be seen in Fig. 5.

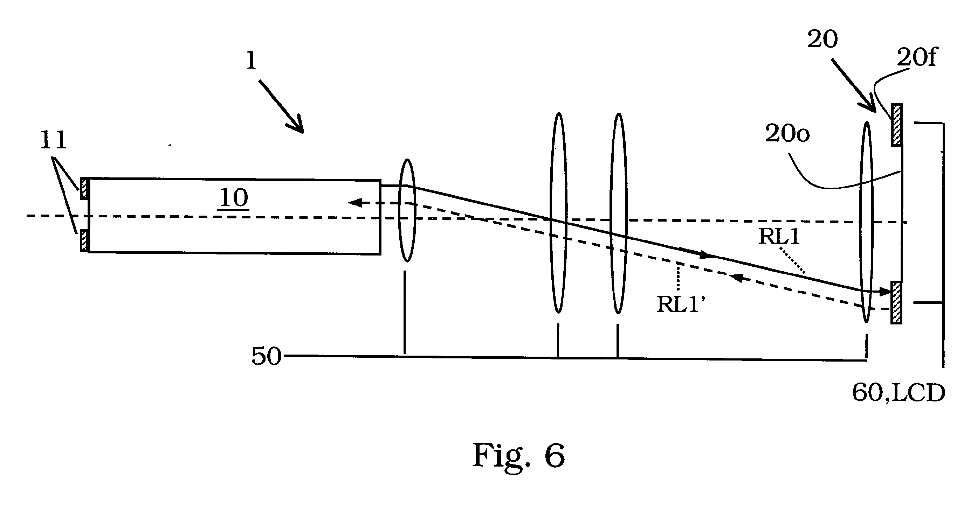

A way to recover this over-illuminated light is described in Fig. 6. Here a light pipe with partially mirror coated entrance surface is used to recover the over-illuminated light, which was back reflected by a mirror coated frame (60) surrounding the active area of the LCD panel.

In the following the present invention will be further elucidated taking reference to the accompanying Figures.

**Fig. 1**      is a cross-sectional side view of a first embodiment of the present invention.

**Fig. 2**      demonstrates the polarization dependent transmittance of an embodiment of the present invention.

**Fig. 3 - 7**      demonstrates further preferred embodiments of the present invention.

In the following identical difference symbols describe identical or similar elements and functions.

Fig. 1 is a cross-sectional side view of a first embodiment of the inventive light collecting, integrating and redirecting arrangement 1.

The light integrating device 10 is build up by an integrator rod of glass, having reflective side faces 10s and light input surface 10i and a light output surface 10o. The light input surface 10i is partially covered with mirror elements 11. The portion of said light input surface 10i not covered by the mirror elements 11 define the light incidence aperture I of the light integrating device 10. In opposition to the light input surface 10i the light output surface 10o is completely covered with an circular polarizer building the reflective element 20. The circular polarizer 20 is capable of transmitting incident primary and redirected illumination light L1 having an R-circular component and reflecting back to the inside of the light integrating device 10, the L-circular component of the primary illumination light L1.

In use, primary illumination light L1 which is emitted from a light source device not shown in Fig. 1 enters the inside of the light integrating device 10 via light incidence aperture I of the light input surface 10i of the light integrating device 10. In the example of Fig. 1 the primary illumination light L1 is reflected at the side faces 10s it positions a and b and hits the light output surface 10o and the polarizer 20 at position c.

The polarization state of the light ray L1 of primary illumination light L1 can in each case be described as a superposition of a pure R-circular component and a pure L-circular component. Upon each of the reflections at positions a and b the polarization state of ray L1 is changed, i.e. the contributions of the R-circular component and of the L-circular component are changed. At position c of the polarizer 20 the R-circular component is transmitted to the outside of the light integrating device 10, whereas the L-circular component is reflected back to the inside of the light integrating device 10. After reflections at positions a', d at the reflective element 11 of the light input surface 10i, b' and a" the remaining light beam L1' hits the polarizer 20 at position c'. Because of the multiple reflections of the beam Li' at positions a', d, b' and a" ray L1' is again not a pure L-circular ray but again a superposition of a L-circular component and a R-circular component. Again, the R-circular component for the second hit is transmitted to the outside of the light integrating device 10, whereas the L-circular component of the second hit is reflected back to the inside of the light integrating device 10.

From this explanation it appears that at least a part of the L-circular component of the first hit which would be wasted in prior art devices can be recovered and used for the illumination process.

Fig. 2 shows different polarization states a to e and respective transmittances $\eta$. For a pure R-circular component a the polarization dependent transmittance of the polarizer 20 of the embodiment of Fig. 1 is 100 %. Example c shows a 1:1 superposition of a R-circular state with an L-circular state, ending up with a polarization dependent transmittance of $\eta = 50$ %. Finally, the incidence of a pure L-circular state the polarizer 20 of Fig. 1 leads to an polarization dependent transmittance of $\eta = 0$ %, i.e. to a complete reflection of the incident light ray.

Fig. 3 demonstrates the possibility of having the polarizer 20 of Fig. 1 build up to part of an illumination unit 50 which is adapted to illuminate a provided LCD-display 60 with the light leaving the light integrating device 10. Again, L-circular components of the redirected primary illumination RL1 is reflected back to the inside of the light integrating device 10 via the light output surface 10o, in which process the different optical elements, for instance lenses or the like of the illumination unit 50 are used.

The embodiment of Fig. 4 shows an reflective element 20 which is build up by an polarizing beam splitter device 40 having a quarter wave retarder device 30 interposed between the beam splitter 40 and the light output surface 10o of the light integrating device 10.

The polarizing beam splitter device 40 consists of combined glass prisms 40-1, 40-2, 40-3. The inner coating 40c is designed for transmitting P-polarized light and for reflecting S-polarized light. The outer walls 40s of the polarizing beam splitter device 40 are coated with a reflective coating.

A light ray L1 is entering the polarizing beam splitter device 40 and is split into P- and S-polarized components or rays a point a. The S-polarized ray is reflected, hitting at point b the air-glass surface 40i at an angle where it is totally internally reflected to point c, where it is reflected at the reflecting surface 40s to point d, where it is reflected back into the light pipe 10. The quarter-wave retarder transforms the linear polarization into a circular polarization.

At other angles of incidence the incoming ray L1' is split at point a'. The reflected ray hits the reflecting surface 40s at point b', where it is reflected to point c', where it is reflected back into the light pipe 10 after being transformed into a circular polarization state by the quarter-wave retarder.

Fig. 5 demonstrates a display device 60 having a central or active portion 60a to be illuminated and an outer, circumference and non-active portion 60n. For avoiding the waste of light directed to the non-active areas 60n of the display device 60 the embodiment of Fig. 6 employs an reflective element 20 which has a frame light construction with the frame portion 20f associated with the non-active areas 60n of the underlying display device 60 and having a central portion 20o being associated with the active area 60a of the display device 60. A light ray of redirected primary illumination light RL1 coming from the light integrating device 10 and being imaged to the non-active areas 60n of the display device 60 is reflected back as a ray of light RL1' to the inside of the light integrating device 10 and therefore not necessarily lost for the imaging process. Here again, the illuminating unit 50 with the different optical elements and lenses is employed.

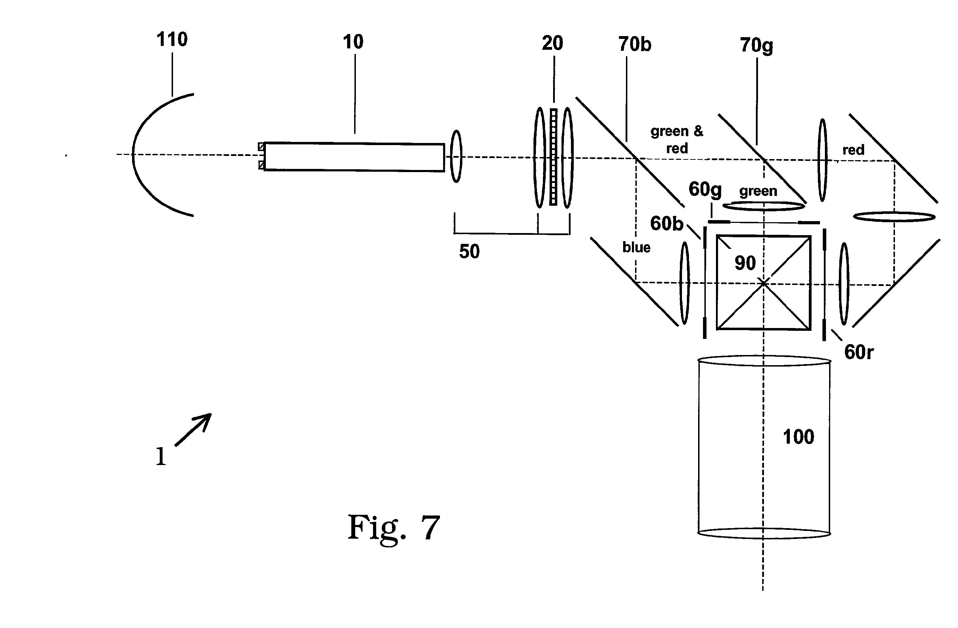

Fig. 7 shows the structure of a typical 3-panel LCD projector and how the invention is incorporated into this structure. Light is collimated by the reflector 110 and focused into the entrance aperture of the light-pipe 10. The light is integrated in the light-pipe 10 and has a uniform and rectangular shaped distribution at the exit. This rectangular distribution is imaged by means of the lenses 50 onto the red, green and blue LCD panels 60r, 60g, and 60b, respectively. The light is polarized by the reflective polarizer 20, where the unwanted polarization is recovered in the light-pipe 10 as described above. The white light is split up into its primary or fundamental components or colours red, green and blue by the dichroic mirrors 70b, 70g and is recombined by the X-cube prism 90 and projected through the lens 100 onto a screen.

**Claims**

1. Light collecting, integrating and redirecting arrangement, in particular for a projection system, a display system, and/or the like,

   - comprising a light integrating device (10) and at least one reflective element (20),
   - said light integrating device (10) being adapted for receiving and for integrating primary illumination light (L1), having a light input surface (10i) for an entry of said primary illumination light (L1) into said light integrating device (10) through a light incidence aperture (I) of said light input surface (10i), having a light output surface (10o) for an exit of collected, integrated and redirected primary illumination light (L1) from said light integrating device (10) as redirected primary illumination light (RL1), and having at least one inner or side face or wall (10s) being adapted for reflecting light travelling between said light input surface (10i) and said light output surface (10o) within said light integrating device (10),

- said reflective element (20) being adapted for reflecting at least a part of received redirected primary illumination light (RL1) back to said light integrating device (10) for entering the same through said light output surface (10o), and

- said light input surface (10i) being provided with reflecting areas (11) disposed outside portions occupied by said light incidence aperture (I) and being adapted for reflecting light coming from the inside of said light integrating device (10) back to the inside of said light integrating device (10).

2. Light collecting, integrating and redirecting arrangement according to claim 1, wherein said light integrating device (10) is a light pipe, an integrator rod and/or the like.

3. Light collecting, integrating and redirecting arrangement according to anyone of the preceding claims, wherein said light integrating device (10) is a solid rod made of an optical transparent material, of plastic, of glass, and/or the like.

4. Light collecting, integrating and redirecting arrangement according to anyone of the preceding claims, wherein said light integrating device (10) is a hollow tube device.

5. Light collecting, integrating and redirecting arrangement according to anyone of the preceding claims, wherein said light integrating device (10) has reflecting or mirrored inner or side faces or walls (10s).

6. Light collecting, integrating and redirecting arrangement according to anyone of the preceding claims, wherein said light integrating device (10) has a rectangular, circular, or oval cross-section.

7. Light collecting, integrating and redirecting arrangement according to anyone of the preceding claims, wherein the entrance and the exit of said light integrating device (10) have different size and/or shape.

8. Light collecting, integrating and redirecting arrangement according to anyone of the preceding claims, wherein said at least one reflective element (20) is disposed outside said light integrating device (10).

9. Light collecting, integrating and redirecting arrangement according to anyone of the preceding claims, wherein said at least one reflective element (20) is disposed in, at or around an optical axis of an output path of said light integrating device (10).

10. Light collecting, integrating and redirecting arrangement according to anyone of the preceding claims, wherein said at least one reflective element (20) is disposed in close proximity to said light output surface (10o) of said light integrating device (10).

11. Light collecting, integrating and redirecting arrangement according to anyone of the preceding claims, wherein said at least one reflective element (20) is attached to said light output surface (10o) of said light integrating device (10).

12. Light collecting, integrating and redirecting arrangement according to anyone of the preceding claims, wherein said at least one reflective element (20) is or comprises a reflective polarizer device, in particular a circular polarizer.

13. Light collecting, integrating and redirecting arrangement according to claim 12, wherein said at least one reflective element (20) is or comprises a reflective polarizer device, in particular together with a retarder device (30).

14. Light collecting, integrating and redirecting arrangement according to anyone of the preceding claims, wherein said at least one reflective element (20) is or comprises a cholesteric film or a plurality thereof.

15. Light collecting, integrating and redirecting arrangement according to anyone of the preceding claims,

wherein said at least one reflective element (20) is or comprises a wire-grid polarizer device, in particular together with a quarter-wave retarder device (30).

16. Light collecting, integrating and redirecting arrangement according to anyone of the preceding claims,
    wherein said at least one reflective element (20) is or comprises a polarizing beam splitter device (40), in particular together with a quarter wave retarder device (30).

17. Light collecting, integrating and redirecting arrangement according to anyone of the preceding claims,
    wherein said at least one reflective element (20) is a reflecting or mirror coated frame having reflecting frame portions (20f) and a transparent central portion, opening, or aperture (20o).

18. Light collecting, integrating and redirecting arrangement according to claim 17,
    wherein said reflecting frame portions (20f) are associated with non-active areas (60n) of a display device (60) and/or
    wherein said transparent central portion (20o) is associated active areas (60a) of a display device (60).

19. Light collecting, integrating and redirecting arrangement according to anyone of the preceding claims,
    wherein said at least one reflective element (20) is a part of an illumination unit (50).

Fig. 1

$\eta = 100\%$

$\eta = 50\%$

$\eta = 0\%$

R

L

a

b

c

d

e

Fig. 2

Fig. 3

Fig. 4

Fig. 5

Fig. 6

EP 1 391 776 A1

Fig. 7

**European Patent Office**

## EUROPEAN SEARCH REPORT

Application Number

EP 02 01 6104

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | EP 1 098 536 A (TEXAS INSTRUMENTS INC) 9 May 2001 (2001-05-09) * paragraph [0037] - paragraph [0047]; figures 8,9,14 * | 1-11,19 | G03B21/00 G03B21/20 G03B21/28 H04N9/31 H04N5/14 G02B5/30 G02B27/00 |
| Y | | 12-18 | |
| Y | US 5 295 009 A (SCHADT MARTIN ET AL) 15 March 1994 (1994-03-15) * column 2, line 1 - column 3, line 2 * * column 7, line 26 - line 41 * * figure 1 * | 12-16 | |
| Y | EP 0 492 636 A (CANON KK) 1 July 1992 (1992-07-01) * abstract; figure 1 * * column 33, line 12 - line 19 * | 14-16 | |
| Y | US 5 590 942 A (MITSUTAKE HIDEAKI ET AL) 7 January 1997 (1997-01-07) * column 3, line 1 - column 4, line 15 * * column 11, line 13 - column 12, line 59; figure 12 * * column 12, line 60 - column 13, line 36; figure 14 * | 16-18 | TECHNICAL FIELDS SEARCHED (Int.Cl.7) G03B H04N G02B |

The present search report has been drawn up for all claims

| Place of search | Date of completion of the search | Examiner |
|---|---|---|
| MUNICH | 12 November 2002 | Rückerl, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 01 6104

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2002

| Patent document cited in search report | | Publication date | Patent family member(s) | | Publication date |
|---|---|---|---|---|---|
| EP 1098536 | A | 09-05-2001 | EP | 1098536 A2 | 09-05-2001 |
| | | | JP | 2001242416 A | 07-09-2001 |
| US 5295009 | A | 15-03-1994 | US | 5235443 A | 10-08-1993 |
| | | | DE | 59010516 D1 | 31-10-1996 |
| | | | EP | 0407830 A2 | 16-01-1991 |
| | | | HK | 1007193 A1 | 01-04-1999 |
| | | | JP | 2509372 B2 | 19-06-1996 |
| | | | JP | 3045906 A | 27-02-1991 |
| | | | KR | 201976 B1 | 15-06-1999 |
| | | | RU | 2068573 C1 | 27-10-1996 |
| | | | WO | 9106613 A1 | 16-05-1991 |
| | | | WO | 9106889 A1 | 16-05-1991 |
| | | | DE | 59008313 D1 | 02-03-1995 |
| | | | EP | 0452438 A1 | 23-10-1991 |
| | | | EP | 0450025 A1 | 09-10-1991 |
| | | | HK | 17897 A | 13-02-1997 |
| | | | JP | 2831463 B2 | 02-12-1998 |
| | | | JP | 4502486 T | 07-05-1992 |
| | | | JP | 2809877 B2 | 15-10-1998 |
| | | | JP | 4502524 T | 07-05-1992 |
| | | | KR | 203549 B1 | 15-06-1999 |
| | | | SG | 50560 A1 | 24-10-2000 |
| | | | US | 5319478 A | 07-06-1994 |
| | | | US | 5309265 A | 03-05-1994 |
| EP 0492636 | A | 01-07-1992 | CA | 2058514 A1 | 28-06-1992 |
| | | | DE | 69119880 D1 | 04-07-1996 |
| | | | DE | 69119880 T2 | 14-11-1996 |
| | | | EP | 0492636 A1 | 01-07-1992 |
| | | | JP | 5066368 A | 19-03-1993 |
| | | | US | 5387953 A | 07-02-1995 |
| | | | JP | 5066367 A | 19-03-1993 |
| US 5590942 | A | 07-01-1997 | JP | 6094902 A | 08-04-1994 |

EPO FORM P0459

For more details about this annex : see Official Journal of the European Patent Office, No. 12/82

17